(19) Europäisches Patentamt
European Patent Office
Office européen des brevets

(11) **EP 3 913 710 A1**

(12) **EUROPEAN PATENT APPLICATION**
published in accordance with Art. 153(4) EPC

(43) Date of publication:
**24.11.2021 Bulletin 2021/47**

(51) Int Cl.:
*H01M 4/48* (2010.01)          *C01B 33/113* (2006.01)
*C01B 33/32* (2006.01)          *H01M 4/36* (2006.01)

(21) Application number: **19910050.4**

(22) Date of filing: **18.12.2019**

(86) International application number:
**PCT/JP2019/049538**

(87) International publication number:
**WO 2020/149079 (23.07.2020 Gazette 2020/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.01.2019 JP 2019004237**

(71) Applicant: SHIN-ETSU CHEMICAL CO., LTD.
**Tokyo 100-0004 (JP)**

(72) Inventors:
• **OSAWA, Yusuke**
  **Annaka-shi, Gunma 379-0125 (JP)**
• **HIROSE ,Takakazu**
  **Annaka-shi, Gunma 379-0125 (JP)**
• **TAKAHASHI, Kohta**
  **Annaka-shi, Gunma 379-0125 (JP)**
• **MATSUNO, Takumi**
  **Annaka-shi, Gunma 379-0125 (JP)**

(74) Representative: **Wibbelmann, Jobst**
**Wuesthoff & Wuesthoff**
**Patentanwälte PartG mbB**
**Schweigerstrasse 2**
**81541 München (DE)**

(54) **NEGATIVE ELECTRODE ACTIVE MATERIAL FOR NONAQUEOUS ELECTROLYTE SECONDARY BATTERY AND METHOD FOR PRODUCING SAME**

(57)    The present invention is a negative electrode active material for a non-aqueous electrolyte secondary battery, containing negative electrode active material particles. The negative electrode active material particles include silicon compound particles each containing a silicon compound ($SiO_X$: $0.5 \leq X \leq 1.6$). The silicon compound particle contains at least one or more of amorphous silicon and microcrystalline silicon. The negative electrode active material particles each contain at least one or more of $Li_2SiO_3$ and $Li_2Si_2O_5$ as a Li compound. The negative electrode active material particle contains a compound having a zeolite crystal structure, the compound adhering to a surface layer portion of the negative electrode active material particle. This provides a negative electrode active material having high stability in an aqueous slurry, high capacity, and favorable cycle characteristics and first-time efficiency.

[FIG. 1]

**Description**

TECHNICAL FIELD

The present invention relates to a negative electrode active material for a non-aqueous electrolyte secondary battery and a method for producing the same.

BACKGROUND ART

In recent years, small electronic devices, represented by mobile terminals, have been widely used and urgently required to reduce the size and weight and to increase the life. Such market requirements have advanced the development of particularly small and lightweight secondary batteries with higher energy density. These secondary batteries are considered to find application not only for small electronic devices but for large electronic devices such as, typically, automobiles as well as power storage systems such as, typically, houses.

Among those, lithium-ion secondary batteries are easy to reduce the size and increase the capacity, and have higher energy density than that of lead or nickel-cadmium batteries, receiving considerable attention.

The lithium-ion secondary battery has positive and negative electrodes, a separator, and an electrolyte. The negative electrode includes a negative electrode active material related to charging and discharging reactions.

A negative electrode active material, which is usually made of a carbon material, is required to further improve the battery capacity for recent market requirement. Use of silicon as a negative electrode active material is considered to improve the battery capacity, for silicon has a theoretical capacity (4199 mAh/g) ten times or more larger than does graphite (372 mAh/g). Such a material is thus expected to significantly improve the battery capacity. The development of silicon materials for use as negative electrode active materials includes not only silicon as a simple but also alloy thereof and a compound thereof such as typically oxides. The consideration of active material shapes ranges from an application type, which is standard for carbon materials, to an integrated type in which the materials are directly accumulated on a current collector.

Use of silicon as a main material of a negative electrode active material, however, expands and shrinks the negative electrode active material when charging or discharging, thereby making the negative electrode active material easy to break particularly near its surface layer. In addition, this negative electrode active material produces ionic substances in its interior and is thus easy to break. The breakage of the surface layer of the negative electrode active material creates a new surface, increasing a reaction area of the active material. The new surface then causes the decomposition reaction of an electrolyte and is coated with a decomposition product of the electrolyte, thereby consuming the electrolyte. This makes the cycle characteristics easy to reduce.

Various materials of a negative electrode for a lithium-ion secondary battery mainly using a silicon material and various electrode configurations have been considered to improve the initial efficiency and the cycle characteristics of the battery.

Specifically, a vapor deposition method is used to accumulate silicon and amorphous silicon dioxide simultaneously so that better cycle characteristics and greater safety are achieved (see Patent Document 1, for example). Moreover, a carbon material (electronic conduction material) is disposed on the surface of silicon oxide particles so that a higher battery capacity and greater safety are achieved (see Patent Document 2, for example). Moreover, an active material including silicon and oxygen is produced to form an active material layer having a higher ratio of oxygen near a current collector so that improved cycle characteristics and higher input-output characteristics are achieved (see Patent Document 3, for example). Moreover, silicon active material is formed so as to contain oxygen with an average oxygen content of 40 at% or less and with higher oxygen content near a current collector so that improved cycle characteristics are achieved (see Patent Document 4, for example).

Moreover, a nano-complex including Si-phase, $SiO_2$, and $M_yO$ metal oxide is used to improve the first time charge-discharge efficiency (see Patent Document 5, for example). To improve the cycle characteristics, $SiO_x$ ($0.8 \leq x \leq 1.5$, the range of particle size = 1 $\mu$m to 50 $\mu$m) and a carbon material are mixed and calcined at a high temperature (see Patent Document 6, for example). A negative electrode active material is controlled by adjusting a mole ratio of oxygen to silicon in the active material in the range from 0.1 to 1.2 so as to hold a difference between the maximum and the minimum of the oxygen-to-silicon mole ratio near the interface between the active material and a current collector at 0.4 or less, so that improved cycle characteristics are achieved (see Patent Document 7, for example). Moreover, a metal oxide containing lithium is used to improve the battery load characteristics (see Patent Document 8, for example). To improve the cycle characteristics, a hydrophobic layer such as a silane compound layer is formed on the surface of a silicon material (see Patent Document 9, for example).

Moreover, a silicon oxide is used and a surface thereof is coated with graphite coating to give electric conductivity so that improved cycle characteristics are achieved (see Patent Document 10, for example). In Patent Document 10, the graphite coating exhibits a RAMAN spectrum that has broad peaks at shift values of 1330 cm[-1] and 1580 cm[-1], and

their intensity ratio $I_{1330}/I_{1580}$ satisfies $1.5 < I_{1330}/I_{1580} < 3$. Similarly, particles having a silicon microcrystal phase dispersed in a silicon dioxide are used to achieve a higher battery capacity and improved cycle characteristics (see Patent Document 11, for example). Moreover, a silicon oxide controlled to have a silicon-to-oxygen atomicity ratio of 1:y $(0<y<2)$ is used to improve overcharge and overdischarge characteristics (see Patent Document 12, for example). Moreover, a mixed electrode containing silicon and carbon is produced with a silicon content being designed to be 5 wt% or more and 13 wt% or less to achieve higher battery capacity and improved cycle characteristics (see Patent Document 13, for example).

CITATION LIST

PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H6-325765 A
Patent Document 13: JP 2010-092830 A

SUMMARY OF INVENTION

TECHNICAL PROBLEM

As described above, small electronic devices, represented by mobile devices, have been advancing recently toward high performance and multifunction, and a lithium-ion secondary battery that is main electric source thereof is required to increase the battery capacity. As a technique to solve this problem, it is desired to develop a lithium-ion secondary battery containing a negative electrode using a silicon material as a main material.

Moreover, such a lithium-ion secondary battery using a silicon material is desired to have battery characteristics almost equivalent to those of a lithium-ion secondary battery using a carbon material. Accordingly, the cycle retention rate and first-time efficiency of batteries have been improved by using a negative electrode active material that is silicon oxide modified by insertion and partial release of Li. However, due to the modification with Li, the modified silicon oxide has relatively low water resistance. This causes insufficient stability of slurry which is to be prepared by incorporating the modified silicon oxide when a negative electrode is produced. Consequently, a gas may be generated as the slurry changes with time, or the silicon oxide particles and a binder component may agglomerate and precipitate (deposit). Hence, there have been problems that equipment and the like which have been commonly used for application of carbon-based active materials may not be used or may be used with difficulty. As described above, when the silicon oxide modified with Li is used to improve the initial efficiency and cycle retention rate is used, the slurry containing water has insufficient stability. As a result, no negative electrode active materials for a non-aqueous electrolyte secondary battery that are advantageous in industrial production of secondary batteries have been proposed.

The present invention has been made in view of the above problems. An object of the present invention is to provide a negative electrode active material having high stability in an aqueous slurry, high capacity, and favorable cycle characteristics and first-time efficiency.

Another object of the present invention is to provide a method for producing a negative electrode active material that has high stability in an aqueous slurry, high capacity, and favorable cycle characteristics and first-time efficiency.

SOLUTION TO PROBLEM

To achieve the object, the present invention provides a negative electrode active material for a non-aqueous electrolyte secondary battery, containing negative electrode active material particles, wherein

the negative electrode active material particles comprise silicon compound particles each containing a silicon compound (SiOx: $0.5 \leq X \leq 1.6$),

the silicon compound particle contains at least one or more of amorphous silicon and microcrystalline silicon,

the negative electrode active material particles each contain at least one or more of $Li_2SiO_3$ and $Li_2Si_2O_5$ as a Li compound, and

the negative electrode active material particle comprises a compound having a zeolite crystal structure, the compound adhering to a surface layer portion of the negative electrode active material particle.

Since the inventive negative electrode active material contains negative electrode active material particles including silicon compound particles (also referred to as silicon-based active material particles), the battery capacity can be improved. Moreover, incorporating a Li compound in the silicon compound particles makes it possible to reduce irreversible capacity generated in charging. This allows improvement of the battery first-time efficiency and cycle characteristics. Further, either $Li_2SiO_3$ or $Li_2Si_2O_5$ as the Li compound is less soluble in water than $Li_4SiO_4$ and exhibits relatively stable behavior in an aqueous slurry. Furthermore, since a compound having a zeolite crystal structure adheres on surface layer portions of the negative electrode active material particles, when the negative electrode active material is mixed with an aqueous slurry in the negative-electrode production process, Li ions eluted from the silicon compound particles and so forth into the aqueous slurry react with the compound having a zeolite structure. This suppresses the reaction between the Li ions and water, making it possible to enhance the slurry stability.

In this case, the compound having a zeolite crystal structure preferably has a diffraction peak which appears within a range of a diffraction angle $2\theta$ from 21 to 22° in an X-ray diffraction using a Cu-K$\alpha$ line.

When the compound having a zeolite crystal structure has such a crystal structure, the adsorption-separation effects by the zeolite structure are more effectively exhibited, so that the slurry stability can be achieved more effectively.

More preferably, the compound having a zeolite crystal structure has a crystallite size of 10 nm or more determined by a Scherrer equation based on a half-value width of a diffraction peak which appears within a range of a diffraction angle $2\theta$ from 21 to 22° in an X-ray diffraction using a Cu-K$\alpha$ line.

The compound having a zeolite crystal structure and such a crystallite size has high crystallinity, and enables further enhancement of the slurry stability.

Moreover, the compound having a zeolite crystal structure is preferably at least any one of aluminosilicate, aluminum phosphate, aluminoborate, molybdenum phosphate, and aluminoarsenate.

Such compounds having a zeolite crystal structure are called microporous materials, and these compounds have micropores, so that higher slurry stability can be achieved.

Further, a relation of $0.01 \leq D1/D2 \leq 2$ is preferably satisfied, where

D1 represents a particle diameter up to which particles account for 50% based on volume in a particle size distribution of the compound having a zeolite crystal structure, and

D2 represents a particle diameter up to which particles account for 50% based on volume in a particle size distribution of the silicon compound particles.

With such a particle diameter ratio between the compound having a zeolite crystal structure and the silicon compound particles, higher effect is demonstrated on the slurry stability, and more favorable cycle characteristics can be obtained.

Further preferably, the negative electrode active material particles satisfy a relation of $P4/P3 \leq 1$ in an X-ray diffraction using a Cu-K$\alpha$ line, where

P4 represents a peak height of a diffraction peak which is attributable to the compound having a zeolite crystal structure and appears within a range of a diffraction angle $2\theta$ from 21 to 22°, and

P3 represents a peak height of a diffraction peak which is attributable to at least part of $Li_2SiO_3$ and appears within a range of a diffraction angle $2\theta$ from 17 to 21°. Furthermore preferably, the P4/P3 satisfies a relation of $P4/P3 \leq 0.5$.

The negative electrode active materials containing the negative electrode active material particles having such peak height ratios can further enhance the slurry stability and improve the battery capacity.

Further preferably, the silicon compound particles satisfy a relation of $0.01 \leq P2/P1 \leq 1$ in an X-ray diffraction using a Cu-K$\alpha$ line, where

P1 represents a peak height of a diffraction peak which is attributable to at least part of $Li_2Si_2O_5$ and appears within a range of a diffraction angle $2\theta$ from 23 to 26°, and

P2 represents a peak height of a diffraction peak which is attributable to Si(220) and appears within a range of a diffraction angle $2\theta$ from 44 to 50°.

The negative electrode active material containing the silicon compound particles having such a peak height ratio can more effectively reduce irreversible capacity generated in charging, and sufficiently exhibit the effect on slurry stability, too.

Further preferably, the silicon compound particles satisfy a relation of $0.01 \leq P2/P3 \leq 0.1$ in an X-ray diffraction using a Cu-K$\alpha$ line, where

P3 represents a peak height of a diffraction peak which is attributable to at least part of $Li_2SiO_3$ and appears within a range of a diffraction angle 2$\theta$ from 17 to 21°, and

P2 represents a peak height of a diffraction peak which is attributable to Si(220) and appears within a range of a diffraction angle 2$\theta$ from 44 to 50°.

The negative electrode active material containing the silicon compound particles having such a peak height ratio can more effectively improve battery capacity, and sufficiently exhibit the effect on slurry stability, too.

Further preferably, the silicon compound particles satisfy a relation of $0.01 \leq P1/P3 \leq 1$ in an X-ray diffraction using a Cu-K$\alpha$ line, where

P1 represents a peak height of a diffraction peak which is attributable to at least part of $Li_2Si_2O_5$ and appears within a range of a diffraction angle 2$\theta$ from 23 to 26°, and

P3 represents a peak height of a diffraction peak which is attributable to $Li_2SiO_3$ and appears within a range of a diffraction angle 2$\theta$ from 17 to 21°.

The negative electrode active material containing the silicon compound particles having such a peak height ratio can achieve better effect on slurry stability.

Furthermore, the silicon compound particles preferably have a crystallite size of 7 nm or less determined by a Scherrer equation based on a half-value width of a diffraction peak which is assigned to Si(220) in an X-ray diffraction using a Cu-K$\alpha$ line.

The silicon compound particles having such a Si crystallite size have low crystallinity and low Si crystal content. Accordingly, when the negative electrode active material having such silicon compound particles is used in a lithium-ion secondary battery, more favorable cycle characteristics and initial charge-discharge characteristics are obtained.

More preferably, at least part of the surfaces of the silicon compound particles is coated with a carbon coating.

Providing such a carbon coating can make the negative electrode active material excellent in electric conductivity.

Further preferably, primary particles of the silicon compound particles include primary particles with particle diameters of 1 $\mu$m or less in a proportion of 5% or less based on volume.

When the proportion of the primary particles having particle diameters of 1 $\mu$m or less is in such a range, it is possible to suppress increase in battery irreversible capacity due to increase in surface area per mass.

Furthermore, the present invention is preferably a method for producing a negative electrode active material for a non-aqueous electrolyte secondary battery containing negative electrode active material particles including silicon compound particles, the method comprising steps of:

preparing silicon compound particles each containing a silicon compound (SiOx: $0.5 \leq X \leq 1.6$);
modifying the silicon compound particles by inserting Li into the silicon compound particles to form at least one or more of $Li_2SiO_3$ and $Li_2Si_2O_5$ as a Li compound; and
adhering a compound having a zeolite crystal structure on surfaces of the modified silicon compound particles, wherein the silicon compound particles with the compound having a zeolite crystal structure and adhering thereto are used to produce a negative electrode active material for a non-aqueous electrolyte secondary battery.

Such a method for producing a negative electrode active material for a non-aqueous electrolyte secondary battery makes it possible to obtain a negative electrode active material having high battery capacity and favorable cycle retention rate, which reflect intrinsic characteristics of silicon oxide modified with Li. Further, since the negative electrode active material thus produced contains the silicon compound particles to which the compound having a zeolite crystal structure adheres as described above, a stable slurry is prepared when a negative electrode is produced. Thus, it is possible to obtain negative electrode active materials that enable industrially advantageous production of secondary batteries.

In this event, at least after the step of modifying the silicon compound particles, the modified silicon compound particles are preferably heated at a heating temperature of 400°C or more and 700°C or less.

By such a heating step, crystal growth of the silicon compound particles is suppressed, so that more favorable cycle characteristics can be obtained.

ADVANTAGEOUS EFFECTS OF INVENTION

The inventive negative electrode active material is capable of stabilizing an aqueous slurry prepared in producing a negative electrode. Moreover, when the negative electrode active material is used for a secondary battery, high capacity, favorable cycle characteristics, and favorable initial charge-discharge characteristics are obtained. Particularly, because of the compound having a zeolite crystal structure adhering to the surface layer portions of the negative electrode active material particles, when the negative electrode active material is mixed with an aqueous slurry in the production process of a negative electrode, the compound having a zeolite structure reacts with Li ions eluted from the silicon compound particles and so forth into the aqueous slurry. Hence, the reaction between the Li ions and water is suppressed, so that the slurry stability is increased successfully. Further, the inventive method for producing a negative electrode active material makes it possible to produce a negative electrode active material which is capable of stabilizing an aqueous slurry prepared in producing a negative electrode, and which exhibits favorable cycle and initial charge-discharge characteristics when the negative electrode active material is used for a lithium-ion secondary battery.

BRIEF DESCRIPTION OF DRAWINGS

FIG. 1 is a sectional view showing a configuration example of a negative electrode for a non-aqueous electrolyte secondary battery, which contains the inventive negative electrode active material.
FIG. 2 is an exemplary chart of an X-ray diffraction measured using a Cu-K$\alpha$ line from negative electrode active material particles which are modified by an oxidation-reduction method and contained in the inventive negative electrode active material (a compound having a zeolite crystal structure is adhered to the silicon compound particles).
FIG. 3 is a view showing a configuration example (laminate film type) of a lithium secondary battery that contains the inventive negative electrode active material.

DESCRIPTION OF EMBODIMENTS

Hereinafter, embodiments of the present invention will be described, but the present invention is not limited thereto.
As described above, as a technique to increase the battery capacity of lithium-ion secondary battery, there has been investigated the use of a negative electrode mainly made from a silicon-based active material as a negative electrode for lithium-ion secondary battery. Such a lithium-ion secondary battery mainly made from a silicon-based active material is desired to have cycle characteristics and initial efficiency almost equivalent to those of a lithium-ion secondary battery using a carbon material. However, even when a silicon-based active material is modified with Li so as to obtain cycle characteristics and initial efficiency almost equivalent to those of a lithium-ion secondary battery using a carbon material, it is difficult to prepare stable slurry from this modified silicon-based active material. Such an unstable slurry has problems that at a relatively early stage after the slurry preparation, a gas or precipitate is generated, making it difficult to produce a high-quality negative electrode.
Accordingly, the present inventors have diligently investigated to obtain a negative electrode active material that can easily produce a non-aqueous electrolyte secondary battery having high battery capacity and favorable cycle characteristics and first-time efficiency; thereby, providing the present invention.
A negative electrode active material for a non-aqueous electrolyte secondary battery according to the present invention is characterized as follows. The inventive negative electrode active material contains negative electrode active material particles. The negative electrode active material particles include silicon compound particles each containing a silicon compound ($SiO_x$: $0.5 \leq X \leq 1.6$). The silicon compound particle contains at least one or more of amorphous silicon and microcrystalline silicon. The negative electrode active material particles each contain at least one or more of $Li_2SiO_3$ and $Li_2Si_2O_5$ as a Li compound. The negative electrode active material particle contains a compound having a zeolite crystal structure, the compound adhering to a surface layer portion of the negative electrode active material particle. In other words, in the inventive negative electrode active material, the silicon compound particle has an adherent material (adhesion material) of the compound having a zeolite crystal structure on the outermost surface layer. Herein, "adhere" and related terms also include the meaning of "cover". Thus, for example, the compound having a zeolite crystal structure in the present invention may cover at least part of the outermost surface layer of the silicon compound particle. In this case, the silicon compound particles has a coating (cover layer) of the compound having a zeolite crystal structure on the outermost surface layer. Further, the compound having a zeolite crystal structure may also be incorporated in a portion other than the outermost surface layer of the silicon compound particle.
Moreover, in the inventive negative electrode active material, at least part of the surfaces of the silicon compound particles is preferably coated with a carbon coating. More specifically, the inventive negative electrode active material preferably further has a carbon coating layer between the compound having a zeolite crystal structure contained in the negative electrode active material particle and the silicon compound particle. Having a carbon coating layer (carbon coating) in this manner, the negative electrode active material has excellent electric conductivity. Note that the compound having a zeolite crystal structure may be present in the carbon coating layer, or may be present on the interface between the carbon coating layer and the silicon-based active material particle.

In the inventive negative electrode active material, the compound having a zeolite crystal structure adheres to the outermost surface layers of the silicon compound particles. Accordingly, the water resistance to an aqueous slurry is high. Conventional aqueous slurries containing such silicon compound as silicon oxide modified by inserting and releasing Li change over time, so that a gas or precipitate is generated at an early stage. Hence, the use has been unsuitable for mass production of secondary batteries.

In contrast, in the present invention, the silicon compound particles have an adherent material of the compound having a zeolite crystal structure as described above. Thereby, the water resistance is improved, and the gas generation and precipitation due to the over-time change of the slurry hardly occur. Hence, in cases where the slurry is applied to a current collector, for example, a stable coating film is successfully obtained, and the binding property is improved. Further, the cation moiety of the stabilized compound having a zeolite crystal structure is more likely to react with carboxyl groups of carboxymethyl cellulose (CMC), which is generally used as a binding agent. Thus, the binding property is further improved.

Accordingly, the use of the inventive negative electrode active material enables industrially advantageous production of non-aqueous electrolyte secondary batteries having high battery capacity and favorable cycle retention rate, which reflect intrinsic characteristics of silicon oxide modified with Li.

<1. Negative Electrode for Non-Aqueous Electrolyte Secondary Battery>

Next, description will be given of a configuration of a negative electrode of a secondary battery, which contains the inventive negative electrode active material as described above.

[Configuration of Negative Electrode]

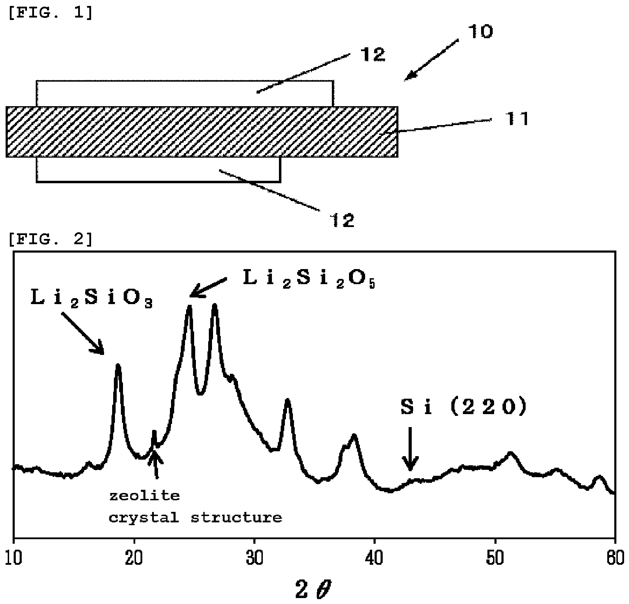

FIG. 1 shows a sectional view of a negative electrode containing the inventive negative electrode active material. As shown in FIG. 1, a negative electrode 10 is constituted to have a negative electrode active material layer 12 on a negative electrode current collector 11. The negative electrode active material layer 12 may be disposed on both sides or only one side of the negative electrode current collector 11. Furthermore, in the inventive negative electrode for a non-aqueous electrolyte secondary battery, the negative electrode current collector 11 is not essential.

[Negative Electrode Current Collector]

The negative electrode current collector 11 is made of a highly electric conductive and mechanically strong material. Examples of the electric conductive material usable for the negative electrode current collector 11 include copper (Cu) and nickel (Ni). This electric conductive material is preferably a material that does not form an intermetallic compound with lithium (Li).

The negative electrode current collector 11 preferably contains carbon (C) and sulfur (S) besides the main element because these elements improve the physical strength of the negative electrode current collector. In particular, when an active material layer that expands in charging is disposed, the current collector containing the above elements has an effect of suppressing deformation of the electrode including the current collector. Each content of the contained elements is not particularly limited, but is preferably 100 ppm by mass or less. This is because a higher effect of suppressing deformation is obtained.

The surface of the negative electrode current collector 11 may or may not be roughened. Examples of the roughened negative electrode current collector include a metallic foil subjected to an electrolyzing process, embossing process, or chemical etching; etc. Examples of the negative electrode current collector that is not roughened include a rolled metallic foil, etc.

[Negative Electrode Active Material Layer]

The negative electrode active material layer 12 contains the inventive negative electrode active material (silicon-based active material), and may further contain a negative electrode active material, such as a carbon-based active material, besides a silicon-based active material. Depending on battery design, other materials may be further contained, such as a thickener (also referred to as "binding agent", "binder"), a conductive assistant agent, etc. Additionally, the form of the negative electrode active material may be particle.

As described above, the inventive negative electrode active material contains silicon compound particles containing an oxygen-containing silicon compound. This silicon compound needs to contain silicon and oxygen as $SiO_x$ in a ratio within $0.5 \leq X \leq 1.6$. When X is 0.5 or more, the oxygen proportion is higher than that of silicon single substance, making the cycle characteristics favorable. When X is 1.6 or less, the resistance of silicon oxide is not too high.

Moreover, in the present invention, the silicon compound becomes more favorable as the crystallinity is lower. Specifically, it is desirable that the size of a crystallite be 7 nm or less as determined by a Scherrer equation based on a half-value width of a diffraction peak which is assigned to Si(220) and obtained in an X-ray diffraction of the silicon compound particles by using a Cu-Kα line. Particularly, when the crystallinity and the Si crystal content are so low as described above, these not only improve the battery characteristics but also enable formation of stable Li compound.

In the present invention, examples of an X-ray diffraction (CuKα) instrument (XRD instrument) with copper used as an anticathode include New D8 ADVANCE manufactured by Bruker AXS, and other similar instruments. Note that crystallite size can be calculated according to the following Scherrer equation based on half-value width (full width at half maximum, FWHM). Note that analysis software having functions equivalent or superior to those of the XRD analysis software DIFFRAC.EVA (manufactured by Bruker AXS) is used to execute appropriate background processing and obtain half-value width.

$$L=K\lambda/(\beta\cos\theta)$$

L: crystallite diameter
β: half-value width: obtained from a peak value with a range of approximately ±5°(/2θ).
peak value: 2θ (47.5°)
peak spread 2θ (measured half-value width - metallic Si half-value width 0.089°*)

    *The metallic Si half-value width 0.089° varies depending on XRD instruments.
    *Crystalline Si free of crystal strain is used to measure the metallic Si half-value width.

Based on this, a half-value width inherent to an XRD instrument is estimated.

By subtracting the Si half-value width from the measured half-value width, a half-value width attributable to crystallite size can be determined.

    λ: X-ray wavelength used (0.154 nm)
    K: Scherrer coefficient: 0.9
    θ: diffraction angle

The negative electrode active material as described above contains negative electrode active material particles including silicon compound particles. Accordingly, the battery capacity can be improved. Moreover, since the silicon compound particles contain lithium silicate(s) as described above, it is possible to reduce irreversible capacity generated in charging. Further, when the proportion of primary particles with particle diameters of 1 μm or less accounts for 5% or less based on volume among primary particles of the silicon compound particles, fine silicon compound particles, from which lithium is readily eluted, are present in a small amount. Accordingly, lithium ion elution from the negative electrode active material can be suppressed when an aqueous negative-electrode slurry is prepared, for example. This consequently improves the stability of the aqueous negative-electrode slurry during negative electrode production, and improves first-time efficiency and cycle characteristics.

Further, in the present invention, the Li compound contained in the silicon compound particles needs to be one or more selected from $Li_2SiO_3$ and $Li_2Si_2O_5$. Nevertheless, other Li compounds than these may also be contained. Li silicates are relatively stable than other Li compounds. Accordingly, the silicon-based active material containing these Li compound(s) achieves more stable battery characteristics. These Li compounds can be obtained by selectively changing a part of $SiO_2$ component formed in the silicon compound particles to a Li compound to thus modify the silicon compound particles.

Incidentally, when silicon oxide electrochemically reacts with Li, $Li_4SiO_4$ is also formed. Nonetheless, $Li_4SiO_4$ is relatively soluble in water and readily eluted out when an aqueous slurry is prepared and used. Therefore, the Li compound contained in the silicon compound particles is preferably $Li_2SiO_3$ and $Li_2Si_2O_5$, which are less soluble in water than $Li_4SiO_4$ and exhibit relatively stable behavior in an aqueous slurry.

Moreover, the silicon compound particles preferably satisfy a relation of 0.01≤P2/P1≤1 in an X-ray diffraction using a Cu-Kα line, where P1 represents a peak height of a diffraction peak which is attributable to at least part of $Li_2Si_2O_5$ and appears within a range of a diffraction angle 2θ from 23 to 26°, and P2 represents a peak height of a diffraction peak which is attributable to Si(220) and appears within a range of a diffraction angle 2θ from 44 to 50°. When this peak height ratio is 0.01 or more, the proportion of $Li_2Si_2O_5$ is not so high, and a reduction in initial charge-discharge characteristics can be suppressed. When this ratio is 1 or less, Si crystal growth does not proceed too much, and reductions in slurry stability and cycle characteristics due to Si exposure from the surface can be suppressed.

Further, the silicon compound particles preferably satisfy a relation of 0.01≤P2/P3≤0.1 in an X-ray diffraction

using a Cu-K$\alpha$ line, where P3 represents a peak height of a diffraction peak which is attributable to at least part of Li$_2$SiO$_3$ and appears within a range of a diffraction angle 2$\theta$ from 17 to 21°, and P2 represents a peak height of a diffraction peak which is attributable to Si(220) and appears within a range of a diffraction angle 2$\theta$ from 44 to 50°. When this peak height ratio is 0.01 or more, the proportion of Li$_2$SiO$_3$ is not so high, and a reduction in initial charge-discharge characteristics can be suppressed. When this ratio is 0.1 or less, Si crystal growth does not proceed too much, and reductions in slurry stability and cycle characteristics due to Si exposure from the surface can be suppressed.

Furthermore, the silicon compound particles preferably satisfy a relation of 0.01≤P1/P3≤1 in an X-ray diffraction using a Cu-K$\alpha$ line, where P1 represents a peak height of a diffraction peak which is attributable to at least part of Li$_2$Si$_2$O$_5$ and appears within a range of a diffraction angle 2$\theta$ from 23 to 26°, and P3 represents a peak height of a diffraction peak which is attributable to Li$_2$SiO$_3$ and appears within a range of a diffraction angle 2$\theta$ from 17 to 21°. When this peak height ratio is 0.01 or more, the proportion of Li$_2$Si$_2$O$_5$, which is more insoluble in water, is sufficient, so that a reduction in slurry stability can be suppressed. When this ratio is 1 or less, Li$_2$Si$_2$O$_5$ is not present too excessively, and a reduction in initial charge-discharge characteristics can be suppressed.

[Method for Producing Negative Electrode]

Next, description will be given of an example of a method for producing the negative electrode for non-aqueous electrolyte secondary battery.

First, the negative electrode material to be contained in the negative electrode is produced. The negative electrode active material can be produced by a production method according to the present invention as follows.

At first, silicon compound particles containing a silicon compound (SiO$_x$: 0.5≤X≤1.6) are prepared. Next, the silicon compound particles are modified by inserting Li into the silicon compound particles to form at least one or more of Li$_2$SiO$_3$ and Li$_2$Si$_2$O$_5$ as a Li compound. Additionally, in this event, Li inserted in the silicon compound particles may be partially released. Further, in this event, a Li compound can be formed in the interior or on the surface of the silicon compound particle simultaneously. Next, a compound having a zeolite crystal structure is adhered to surfaces of the modified silicon compound particles. In the present invention, the silicon compound particles with the compound having a zeolite crystal structure and adhering thereto are used to produce a negative electrode active material for a non-aqueous electrolyte secondary battery. Further, this negative electrode active material is, for example, mixed with a conductive assistant agent and/or a binder, so that a negative electrode material and a negative electrode can be produced.

More specifically, the negative electrode material is produced, for example, by the following procedure.

First, in order to prepare silicon compound particles containing a silicon compound including a silicon compound (SiO$_x$: 0.5≤X≤1.6), a raw material which generates silicon oxide gas is heated in the presence of inert gas or under reduced pressure in a temperature range of 900°C to 1600°C to generate silicon oxide gas. In this case, the raw material is a mixture of metallic silicon powder with silicon dioxide powder. In consideration of the existence of oxygen on the surface of the metallic silicon powder and slight oxygen in a reaction furnace, the mixing mole ratio is desirably in a range of 0.8 < metallic silicon powder/silicon dioxide powder < 1.3. The Si crystallites in the particles are controlled by changing the charging range or the evaporation temperature, or by a heat treatment after the preparation. The generated gas is deposited on an adsorption plate. While the temperature inside the reaction furnace is lowered to 100°C or less, the deposit is taken out, ground, and powdered using a ball mil, a jet mil, or the like.

Next, a carbon coating layer is formed on a surface layer of the obtained powder material (silicon compound particles and silicon oxide particles). Nevertheless, this step is not essential. The carbon coating layer is effective to further improve the battery characteristics of the negative electrode active material.

As a method for forming the carbon coating layer on the surface layer of the powder material, thermal decomposition CVD is desirable. In the thermal decomposition CVD, the powder material is set in a furnace, the furnace is filled with a hydrocarbon gas, and the temperature in the furnace is raised. The pyrolysis temperature is particularly preferably, but not particularly limited to, 1200°C or less, more preferably 950°C or less. Thereby, unintentional disproportionation of the silicon oxide can be suppressed. The hydrocarbon gas is not particularly limited, but preferably has a composition of C$_n$H$_m$ where 3 ≥ n. This is because of low production cost and favorable properties of the decomposition products.

Next, Li is inserted into the silicon compound particles to modify the silicon compound particles. In the present invention, when the silicon compound particles are modified, it is possible to employ methods, such as an electrochemical method and modification by oxidation-reduction reaction.

In the modification by the oxidation-reduction method, for example, first, lithium is dissolved in an ether-based solvent to prepare a solution A. The silicon-based active material particles are immersed in the solution A, so that lithium can be inserted. The solution A may further contain a polycyclic aromatic compound or a linear polyphenylene compound. The Li compound can be stabilized by heating the resulting silicon-based active material particles at 400 to 700°C. With 400°C or less, the Li silicate is not stabilized and does not function as an irreversible component in charging or discharging, so that the initial charge-discharge characteristics are lowered. With 700°C or more, Si crystal growth is promoted, and the slurry stability and cycle characteristics are lowered. In addition, after the lithium insertion, the silicon-based active material particles may be immersed in a solution B containing a polycyclic aromatic compound or a derivative thereof to release active lithium from the silicon-based active material particles. As a solvent of the solution B, for example, an ether-based solvent, a ketone-based solvent, an ester-based solvent, an alcohol-based solvent, an amine-based solvent, or a mixed solvent thereof can be used. Then, washing is performed, for example, by a washing method with alkaline water in which lithium carbonate, lithium oxide, or lithium hydroxide is dissolved, alcohol, weak acid, pure water, or the like.

As the ether-based solvent used in the solution A, it is possible to use diethyl ether, tert-butyl methyl ether, tetrahydrofuran, dioxane, 1,2-dimethoxy ethane, diethylene glycol dimethyl ether, triethylene glycol dimethyl ether, tetraethylene glycol dimethyl ether, mixed solvents thereof, etc. Among these, tetrahydrofuran, dioxane, 1,2-dimethoxy ethane, and diethylene glycol dimethyl ether are particularly preferably used. These solvents are preferably dehydrated, and preferably deoxygenized.

Moreover, as the polycyclic aromatic compound contained in the solution A, it is possible to use one or more kinds of naphthalene, anthracene, phenanthrene, naphthacene, pentacene, pyrene, triphenylene, coronene, chrysene, and derivatives thereof. As the linear polyphenylene compound, it is possible to use one or more kinds of biphenyl, terphenyl, and derivatives thereof.

As the polycyclic aromatic compound contained in the solution B, it is possible to use one or more kinds of naphthalene, anthracene, phenanthrene, naphthacene, pentacene, pyrene, triphenylene, coronene, chrysene, and derivatives thereof.

Moreover, as the ether-based solvent of the solution B, it is possible to use one or more kinds of diethyl ether, tert-butyl methyl ether, tetrahydrofuran, dioxane, 1,2-dimethoxy ethane, diethylene glycol dimethyl ether, triethylene glycol dimethyl ether, tetraethylene glycol dimethyl ether, mixed solvents thereof, etc.

As the ketone-based solvent, it is possible to use acetone, acetophenone, etc.

As the ester-based solvent, it is possible to use methyl formate, methyl acetate, ethyl acetate, propyl acetate, isopropyl acetate, etc.

As the alcohol-based solvent, it is possible to use methanol, ethanol, propanol, isopropyl alcohol, etc.

As the amine-based solvent, it is possible to use methylamine, ethylamine, ethylenediamine, etc.

Note that at least after the step of modifying the silicon compound particles, the modified silicon compound particles are preferably heated at a heating temperature of 400°C or more and 700°C or less. By such a heating step, crystal growth of the silicon compound particles is suppressed, resulting in more favorable cycle characteristics.

Subsequently, a compound having a zeolite crystal structure is adhered onto surfaces of the modified silicon compound particles. For example, the compound having a zeolite crystal structure can be adhered onto the surfaces of the modified silicon compound particles by the following method. Specifically, a mixture of the silicon compound particles and the compound having a zeolite crystal structure is crushed with a mortar machine and mixed, so that the compound having a zeolite crystal structure can be adhered to the surfaces of the silicon compound particles. In this event, there is a possibility that part of the lithium silicate contained in the silicon compound particles reacts with the compound having a zeolite crystal structure to form a metal silicate salt. This reaction progresses depending on the state of the lithium silicate contained in the silicon oxide particles. For example, there is a case where the compound having a zeolite crystal structure partially reacts with the lithium silicate, so that the compound having a zeolite crystal structure not reacted with the lithium silicate remains on at least part of the surface of the silicon oxide particle, the surface of the carbon coating, or both of them. Alternatively, the reaction may not progress, so that the compound having a zeolite crystal structure adheres to the surface of the modified silicon oxide particle, but the metal silicate salt does not adhere thereto. In these manners, the compound having a zeolite crystal structure can adhere to the surfaces of the silicon oxide particles after the modification.

Further, the inventive negative electrode active material contains the compound having a zeolite crystal structure, the compound adhering to the outermost surface layers of the silicon compound particles. Examples of the compound having a zeolite crystal structure include aluminosilicate, aluminum phosphate, aluminoborate, molybdenum phosphate, aluminoarsenate, etc. Compounds like these further stabilize an aqueous slurry mixed with the inventive negative electrode active material. Among these, the compound having a zeolite crystal structure is preferably a phosphate salt of aluminum. Even though certain effects (such as slurry stability) are obtained from aluminosilicate, aluminoborate, molybdenum phosphate, and aluminoarsenate, higher effects are obtained from an aluminum phosphate salt.

Moreover, the compound having a zeolite crystal structure preferably has a diffraction peak (peak peculiar to the zeolite crystal structure) which appears within a range of a diffraction angle $2\theta$ from 21 to 22° in an X-ray diffraction using a Cu-K$\alpha$ line. With this diffraction peak, the adsorption action peculiar to the zeolite crystal structure can be exhibited more effectively. Thus, the aqueous slurry is further stabilized. It is more preferable to have a crystallite size of 10 nm or more determined by a Scherrer equation based on a half-value width of the diffraction peak which appears within the diffraction angle $2\theta$ range of 21 to 22° in the X-ray diffraction using a Cu-K$\alpha$ line. If microcrystals or microparticles of a compound having a zeolite crystal structure are detected as crystallites with such size based on a diffraction peak in an X-ray diffraction, it can be said that the crystallinity is high. In other words, the compound having a zeolite crystal structure with such a crystallite size has high crystallinity, and thus can further enhance the slurry stability. Note that FIG. 2 shows an example of an X-ray diffraction chart obtained using a Cu-K$\alpha$ line and measured from the negative electrode active material particles (the silicon compound particles to which the compound having a zeolite crystal structure adheres) contained in the inventive negative electrode active material. This is a chart obtained when the lithium-doping modification was carried out by the oxidation-reduction method. Besides a diffraction peak attributable to Si(220) plane, a diffraction peak attributable to $Li_2SiO_3$, and a diffraction peak attributable to $Li_2Si_2O_5$, the chart shows that the peak peculiar to zeolite crystal structure appears within the diffraction angle 2θ range from 21 to 22°.

Furthermore, the inventive negative electrode active material preferably satisfies a relation of P4/P3≤1 in an X-ray diffraction using a Cu-K$\alpha$ line, where P4 represents a peak height of a diffraction peak which is attributable to the compound having a zeolite crystal structure and appears within a range of a diffraction angle 2θ from 21 to 22°, and P3 represents a peak height of a diffraction peak which is attributable to at least part of $Li_2SiO_3$ and appears within a range of a diffraction angle 2θ from 17 to 21°. When this ratio is 1 or less, the proportion of the zeolite in the negative electrode active material is not so high, and a reduction in initial charge-discharge characteristics can be suppressed. This value is more preferably smaller, and is further preferably 0.5 or less (i.e., P4/P3≤0.5).

To measure the particle size distribution, for example, a laser diffraction particle size analyzer SALD-3100 (manufactured by SHIMADZU CORPORATION) can be used. For example, a dispersion solution in which the silicon compound particles (SiOx material) are dispersed using a surfactant may be added dropwise into such a laser-diffraction-type particle-size-distribution measurement apparatus to measure the particle size.

It is preferable to satisfy a relation of 0.01≤D1/D2≤2, where D1 represents a particle diameter up to which particles account for 50% based on volume in a particle size distribution of the compound having a zeolite crystal structure, and D2 represents a particle diameter up to which particles account for 50% based on volume in a particle size distribution of the silicon compound particles. When this ratio is 0.01 or more, the compound can more surely have a zeolite crystal structure, and can more surely improve the slurry stability. When this ratio is 2 or less, the compound having a zeolite crystal structure is more uniformly dispersed on the silicon compound surfaces, so that the slurry stability can be improved more surely.

Subsequently, the silicon-based active material particles containing the silicon compound particles (silicon oxide particles) with an adherent material of the compound having a zeolite crystal structure are mixed with a carbon-based active material as necessary. Then, the negative electrode active material of these is mixed with other materials, such as a binder and a conductive assistant agent, to form a negative electrode mixture. Thereafter, an organic solvent, water, or the like is added thereto to form a slurry.

Next, as shown in FIG. 1, this negative electrode mixture slurry is applied onto the surface of the negative electrode current collector 11 and dried to form the negative electrode active material layer 12. In this event, heat pressing and so on may be performed as necessary. As has been described above, the inventive negative electrode for a non-aqueous electrolyte secondary battery is successfully produced.

<2. Lithium-Ion Secondary Battery>

A non-aqueous electrolyte secondary battery according to the present invention contains the inventive negative electrode active material for a non-aqueous electrolyte secondary battery. Hereinafter, a secondary battery of laminate film type will be described as an example of the inventive non-aqueous electrolyte secondary battery.

[Configuration of Laminate Film Type Secondary Battery]

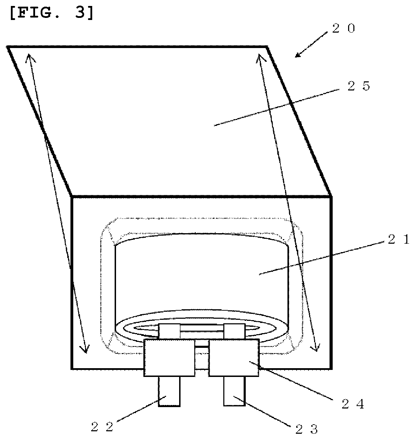

A laminate film type lithium-ion secondary battery 20 shown in FIG. 3 mainly includes a wound electrode body 21 stored in sheet-shaped outer parts 25. This wound electrode body 21 is formed by winding a positive electrode, a negative electrode, and a separator disposed between these electrodes. There is also a case storing a laminate having a separator disposed between a positive electrode and a negative electrode. The electrode bodies of both types have a positive-electrode lead 22 attached to the positive electrode and a negative-electrode lead 23 attached to the negative electrode. The outermost circumference of the electrode bodies is protected by a protecting tape.

The positive-electrode lead 22 and the negative-electrode lead 23, for example, extend from the interior of the outer parts 25 toward the exterior in one direction. The positive-electrode lead 22 is made of, for example, a conductive material, such as aluminum. The negative-electrode lead 23 is made of, for example, a conductive material, such as nickel or copper.

An example of the outer part 25 is a laminate film composed of a fusion-bond layer, a metallic layer, and a surface protecting layer stacked in this order. Two laminate films are fusion-bonded or stuck with an adhesive or the like at the outer edges of their fusion-bond layers such that each fusion-bond layer faces the electrode body 21. The fusion-bond portion is for example a film, such as a polyethylene or polypropylene film. The metallic portion is aluminum foil, etc. The protecting layer is for example nylon, etc.

The space between the outer parts 25 and the positive- and negative-electrode leads is filled with close adhesion films 24 to prevent air from entering therein. Exemplary materials of the close adhesion films include polyethylene, polypropylene, and polyolefin resins.

The positive electrode has a positive electrode active material layer disposed on one side or both sides of a positive electrode current collector like the negative electrode 10 shown in FIG. 1, for example.

The positive electrode current collector is made of, for example, a conductive material, such as aluminum.

The positive electrode active material layer contains any one kind or two kinds or more of positive electrode materials capable of occluding and releasing lithium ions, and may contain a positive electrode binding agent, a positive electrode conductive assistant agent, a dispersing agent, or other materials according to design. The details of the positive electrode binding agent and the positive electrode conductive assistant agent in this case are the same as those for the negative electrode binding agent and negative electrode conductive assistant agent described above, for example.

The positive electrode material is preferably a compound containing lithium. Examples of the lithium-containing compound include complex oxides each composed of lithium and a transition metal element, and phosphate compounds each containing lithium and a transition metal element. Among these positive electrode materials, a compound containing at least one of nickel, iron, manganese, and cobalt is preferable. The chemical formula of such compounds is expressed by, for example, $Li_xM_1O_2$ or $Li_yM_2PO_4$. In the formulae, $M_1$ and $M_2$ represent at least one kind of transition metal elements. "x" and "y" each represent a value varied depending on a charging or discharging status of a battery, which typically satisfy $0.05 \leq x \leq 1.10$ and $0.05 \leq y \leq 1.10$.

Examples of the complex oxides composed of lithium and a transition metal element include a lithium cobalt complex oxide ($Li_xCoO_2$), a lithium nickel complex oxide ($Li_xNiO_2$), a lithium-nickel-cobalt complex oxide, etc. Examples of the lithium-nickel-cobalt complex oxide include lithium-nickel-cobalt-aluminum complex oxide (NCA), lithium-nickel-cobalt-manganese complex oxide (NCM), etc.

Examples of the phosphate compounds containing lithium and a transition metal element include a lithium-iron-phosphate compound ($LiFePO_4$), a lithium-iron-manganese-phosphate compound ($LiFe_{1-u}Mn_uPO_4$ (0<u<1)), etc. Higher battery capacity and excellent cycle characteristics can be obtained using these positive electrode materials.

[Negative Electrode]

The negative electrode has a configuration which is similar to that of the above negative electrode 10 for a lithium-ion secondary battery shown in FIG. 1, and, for example, has the negative electrode active material layers disposed on both faces of the current collector. The negative electrode preferably has a negative-electrode charge capacity larger than electrical capacitance (battery charge capacity) provided by the positive electrode active material. This negative electrode itself can suppress the precipitation of lithium metal thereon.

The positive electrode active material layer is formed partially on both faces of the positive electrode current collector. Similarly, the negative electrode active material layer is also formed partially on both faces of the negative electrode current collector. In this case, the negative electrode active material layer provided on the negative electrode current collector, for example, has a region which does not face any positive electrode active material layer. This intends to perform a stable battery design.

The area at which the positive and negative electrode active material layers do not face one another is hardly affected by charging and discharging. The status of the negative electrode active material layer is consequently retained since its formation. This enables repeatable high-precision investigation of, for example, the composition of negative electrode active material without being affected by charging and discharging.

[Separator]

The separator separates the positive electrode and the negative electrode, prevents short circuit current due to contact of these electrodes, and passes lithium ions therethrough. This separator may be made of, for example, a porous film of synthetic resin or ceramic; alternatively, the separator may have two or more stacked porous films to give laminate structure. Examples of the synthetic resin include polytetrafluoroethylene, polypropylene, polyethylene, etc.

[Electrolytic Solution]

At least a part of the active material layers or the separator is impregnated with a liquid electrolyte (electrolytic solution). This electrolytic solution is composed of electrolyte salt dissolved in a solvent and may contain other materials such as additives.

The solvent to be used may be, for example, a non-aqueous solvent. Examples of the non-aqueous solvent include ethylene carbonate, propylene carbonate, butylene carbonate, dimethyl carbonate, diethyl carbonate, ethylmethyl carbonate, methylpropyl carbonate, 1,2-dimethoxyethane, tetrahydrofuran, etc. Among these, at least one or more of ethylene carbonate, propylene carbonate, dimethyl carbonate, diethyl carbonate, or ethylmethyl carbonate are preferably used because such solvent(s) enable better characteristics. In this case, superior characteristics can be obtained by combined use of a high-viscosity solvent, such as ethylene carbonate or propylene carbonate, and a low-viscosity solvent, such as dimethyl carbonate, ethylmethyl carbonate, or diethyl carbonate. This is because the dissociation of electrolyte salt and ionic mobility are improved.

The solvent preferably contains an unsaturated carbon bond cyclic carbonate ester as an additive because this enables the formation of a stable coating on the negative electrode surface at charging and discharging and the inhibition of a decomposition reaction of the electrolytic solution. Examples of the unsaturated carbon bond cyclic carbonate ester include vinylene carbonate, vinyl ethylene carbonate, etc.

In addition, the solvent preferably contains sultone (cyclic sulfonic acid ester) as an additive because this improves chemical stability of a battery. Examples of the sultone include propane sultone and propene sultone.

In addition, the solvent preferably contains acid anhydride because this improves chemical stability of the electrolytic solution. An example of the acid anhydride includes propane disulfonic acid anhydride.

The electrolyte salt may contain, for example, at least one light metal salt, such as lithium salt. Examples of the lithium salt include lithium hexafluorophosphate ($LiPF_6$), lithium tetrafluoroborate ($LiBF_4$), etc.

The content of the electrolyte salt in the solvent is preferably 0.5 mol/kg or more and 2.5 mol/kg or less. This is because high ionic conductivity is achieved.

[Method of Producing Laminate Film Type Secondary Battery]

In the beginning, a positive electrode is produced with the above positive electrode material. A positive electrode mixture is first created by mixing the positive electrode active material with as necessary the positive electrode binding agent, the positive electrode conductive assistant agent, and other materials, and then dispersed in an organic solvent to form slurry of the positive-electrode mixture. Subsequently, the mixture slurry is applied to a positive electrode current collector with a coating apparatus such as a die coater having a die head or a knife roll, and dried by hot air to obtain a positive electrode active material layer. The positive electrode active material layer is finally compressed with, for example, a roll press. In this event, heating may be performed, and the compression may be repeated multiple times.

Next, a negative electrode active material layer is formed on a negative electrode current collector to produce a negative electrode through the same procedure as in the above production of the negative electrode 10 for a lithium-ion secondary battery.

In producing the positive electrode and the negative electrode, the active material layers are formed on both faces of the positive and negative electrode current collectors. In this event, in both the electrodes, the length of these active material layers formed on the faces may differ from one another (see FIG. 1).

Then, an electrolytic solution is prepared. Subsequently, with ultrasonic welding or the like, the positive-electrode lead 22 is attached to the positive electrode current collector and the negative-electrode lead 23 is attached to the negative electrode current collector (see FIG. 3). Then, the positive and negative electrodes and the separator interposed therebetween are stacked or wound to produce the wound electrode body 21 and a protecting tape is stuck to the outermost circumference of the body. Next, the wound body is flattened.

Subsequently, the film-shaped outer part 25 is folded in half to interpose the wound electrode body therebetween. The insulating portions of the outer parts are stuck to one another by heat sealing, thereby the wound electrode body is encapsulated with one direction being opened. Thereafter, the close-adhesion films are inserted between the outer parts and the positive- and negative-electrode leads. Then, the prepared electrolytic solution is introduced in a prescribed amount from the opened side to perform the impregnation of the electrolytic solution under a vacuum. After the impregnation, the opened side is stuck by vacuum heat sealing. In this manner, the laminate film type secondary battery 20 is successfully produced.

The inventive non-aqueous electrolyte secondary battery such as the laminate film type secondary battery 20 produced as described above preferably has a negative-electrode utilization ratio of 93% or more and 99% or less at charging and discharging. With the negative-electrode utilization ratio in the range of 93% or more, the first time charge efficiency is not lowered, and the battery capacity can be greatly improved. Meanwhile, with the negative-electrode utilization ratio in the range of 99% or less, Li is not precipitated, and the safety can be guaranteed.

EXAMPLE

Hereinafter, the present invention will be more specifically described by showing Examples of the present invention and Comparative Examples. However, the present invention is not limited to these Examples.

(Example 1-1)

The laminate film type secondary battery 20 shown in FIG. 3 was prepared by the following procedure.

The procedure began with the production of a positive electrode. A positive-electrode mixture was prepared by mixing 95 parts by mass of lithium-nickel-cobalt-aluminum complex oxide ($LiNi_{0.7}CO_{0.25}Al_{0.05}O$) as a positive electrode active material, 2.5 parts by mass of a positive electrode conductive assistant agent (acetylene black), and 2.5 parts by mass of a positive electrode binding agent (polyvinylidene fluoride: PVDF). Then, the positive-electrode mixture was dispersed in an organic solvent (N-methyl-2-pyrrolidone: NMP) to form paste slurry. The slurry was subsequently applied to both surfaces of a positive electrode current collector with a coating apparatus having a die head and dried with a drying apparatus of hot-air type. The positive electrode current collector used here had a thickness of 15 $\mu$m. The resultant was finally compressed with a roll press.

Next, a negative electrode was produced. In the beginning, a silicon-based active material was produced as follows. A mixed raw material of metallic silicon and silicon dioxide (material to be vaporized) was placed in a reaction furnace and evaporated in an atmosphere with a vacuum degree of 10 Pa to deposit the evaporated material on an adsorption plate. The deposit was sufficiently cooled, then taken out, and pulverized with a ball mill to obtain silicon oxide particles (silicon compound particles). In thus obtained silicon compound particles, the value of "x" in $SiO_x$ was 0.5. Subsequently, the particle diameters of the silicon compound particles were adjusted. Then, thermal CVD was performed to form carbon coating layer. Among the primary particles of this silicon compound, the proportion of primary particles with particle diameters of 1 $\mu$m or less was 0% by volume.

Subsequently, the silicon compound particles covered with the carbon coating (hereinafter also referred to as "carbon-coated silicon compound particles") were doped with lithium by the oxidation-reduction method as follows to insert lithium into the silicon compound particles for modification. First, the carbon-coated silicon compound particles were immersed into a solution (solution A) in which a lithium piece and biphenyl as an aromatic compound were dissolved in diglyme. This solution A had been prepared by: dissolving, in a diglyme solvent, biphenyl whose concentration would be 10 mass% relative to the silicon compound particles covered with the carbon coating; and then adding a lithium piece whose mass was 8 mass% of the silicon compound particles covered with the carbon coating. Additionally, when the carbon-coated silicon compound particles were immersed into the solution A, the solution temperature was 20°C, and the immersion time was 6 hours. Thereafter, the carbon-coated silicon compound particles were collected by filtration. By the above-described treatment, lithium was inserted into the carbon-coated silicon compound particles.

The resulting carbon-coated silicon compound particles were heated under an argon atmosphere at 600°C for 3 hours to stabilize the Li compound.

Next, the carbon-coated silicon compound particles were washed. The washed carbon-coated silicon compound particles were dried under reduced pressure. The washing was performed by stirring the particles in an aqueous alkaline solution for 2 hours. In this manner, the carbon-coated silicon compound particles were modified. By the aforementioned process, the carbon-coated silicon compound particles were prepared.

Next, aluminum phosphate (compound having a zeolite crystal structure) was mixed with the carbon-coated silicon compound particles to prepare a negative electrode active material (silicon-based active material) containing the negative electrode active material particles (silicon-based active material particles). The mass proportion of aluminum in this negative electrode active material was 0.5 mass%. In the particle size distributions of the carbon-coated silicon compound particles and the aluminum phosphate, D1/D2 was 0.12, where D1 (the particle diameter of the aluminum phosphate) and D2 (the particle diameter of the silicon compound particles) each represent a particle diameter up to which the particles account for 50% by volume.

The resulting powder had, in the X-ray diffraction pattern obtained using a Cu-K$\alpha$ line, diffraction peaks derived from: $Li_2SiO_3$ assigned within the diffraction angle $2\theta$ range of 17 to 21°; $Li_2Si_2O_5$ assigned within the diffraction $2\theta$ range of 23 to 26°; and zeolite crystal structure assigned within the diffraction angle $2\theta$ range of 21 to 22°. The crystallite size determined by the Scherrer equation based on the half-value width of the diffraction peak derived from the zeolite crystal structure was 37.2 nm. The crystallite size of microcrystals determined by the Scherrer equation based on the half-value width of the diffraction peak assigned to Si(220) was 6 nm. P2/P1 was 0.9, P2/P3 was 0.07, P1/P3 was 0.08, and P4/P3 was 0.19.

Next, the negative electrode active material (silicon-based active material) was blended with a carbon-based active material such that the mass ratio of the silicon-based active material particles and carbon-based active material particles was 1:9. Thereby, a mixed negative electrode active material was prepared. The carbon-based active material used herein was a mixture in which artificial graphite and natural graphite coated with a pitch layer were mixed in a mass ratio of 5:5. Additionally, the carbon-based active material had a median diameter of 20 $\mu$m.

Next, the mixed negative electrode active material, conductive assistant agent-1 (carbon nanotube, CNT), conductive assistant agent-2 (carbon fine particles with a median diameter of about 50 nm), styrene-butadiene rubber (styrene-butadiene copolymer; hereinafter, referred to as SBR), and carboxymethyl cellulose (hereinafter, referred to as CMC) were mixed in a dry mass ratio of 92.5:1:1:2.5:3. This was diluted with pure water to form negative electrode mixture slurry. Incidentally, the foregoing SBR and CMC were negative electrode binders (negative electrode binding agents).

As a negative electrode current collector, an electrolytic copper foil with a thickness of 15 $\mu$m was used. This electrolytic copper foil contained carbon and sulfur each at a concentration of 70 ppm by mass. Finally, the negative-electrode mixture slurry was applied onto the negative electrode current collector, and dried at 100°C for 1 hour in a vacuum atmosphere. After drying, the negative electrode had a deposited amount of a negative electrode active material layer per unit area at one side (also referred to as an area density) of 5 mg/cm$^2$.

Next, solvents (4-fluoro-1,3-dioxolane-2-one (FEC), ethylene carbonate (EC), and dimethyl carbonate (DMC), were mixed, followed by dissolving electrolyte salt (lithium hexafluorophosphate: LiPF$_6$) to prepare an electrolytic solution. In this case, the solvent composition was set to FEC:EC:DMC=10:20:70 in a volume ratio, and the content of the electrolyte salt was set to 1.2 mol/kg based on the solvents.

Then, a secondary battery was assembled as follows. First, an aluminum lead was attached to one end of the positive electrode current collector by ultrasonic welding, and a nickel lead was welded to one end of the negative electrode current collector. Subsequently, the positive electrode, a separator, the negative electrode, and a separator were laminated in this order, and wound in the longitudinal direction to produce a wound electrode body. The end of the winding portion was fixed with a PET protecting tape. The separator used herein was a laminate film (thickness: 12 $\mu$m) in which a film mainly composed of porous polyethylene was sandwiched by films mainly composed of porous polypropylene. Thereafter, the electrode body was put between outer parts, and then peripheries excluding one side were hot melted, and thereby the electrode body was stored in the outer parts. As the outer part, an aluminum laminate film was used in which a nylon film, an aluminum foil, and a polypropylene film were laminated. Then, the prepared electrolytic solution was introduced from the opening to perform the impregnation under a vacuum atmosphere. The opening was then stuck by heat sealing.

The cycle characteristics and first time charge-discharge characteristics of the secondary battery thus prepared were evaluated.

The cycle characteristics were investigated in the following manner. First, two cycles of charging and discharging were performed at 0.2 C under an atmosphere of 25°C to stabilize the battery, and the discharge capacity in the second cycle was measured. Next, charging and discharging were repeated until the total number of cycles reached 499 cycles and the discharge capacity was measured every cycle. Finally, a capacity retention rate (hereinafter, also simply referred to as retention rate) was calculated by dividing the discharge capacity in the 500th cycle, which was obtained by charging and discharging at 0.2 C, by the discharge capacity in the second cycle. In the normal cycle, that is, in the cycles from the third cycle to 499th cycle, the charging and discharging were performed at 0.7 C in charging and at 0.5 C in discharging.

In investigating the first time charge-discharge characteristics, the first-time efficiency (hereinafter, may also be referred to as initial efficiency) was calculated. The first-time efficiency was calculated from the equation shown by: first-time efficiency (%) = (first-time discharge capacity/first-time charge capacity) $\times$ 100. The atmospheric temperature was the same as that in investigating the cycle characteristics.

(Examples 1-2, 1-3, Comparative Examples 1-1, 1-2)

Secondary batteries were produced as in Example 1-1, except for adjusting the oxygen amount in the bulk of the silicon compound. In these events, the oxygen amount was adjusted by changing the heating temperature or the ratio of metallic silicon and silicon dioxide in the raw material of the silicon compound. Each "x" value of the silicon compound shown by SiO$_x$ in Examples 1-1 to 1-3 and Comparative Examples 1-1 and 1-2 is shown in Table 1.

In this case, the silicon-based active material particles in Examples 1-2 and 1-3 and Comparative Examples 1-1 and 1-2 had properties as follows. The negative electrode active material particles contained Li$_2$SiO$_3$ and Li$_2$Si$_2$O$_5$. Moreover, the silicon compounds each had a crystallite size of 6 nm, which was attributable to a Si(220) crystal face obtained in the X-ray diffraction. Further, the carbon material which covered the surface had an average thickness of 100 nm. The negative electrode active material particles had D50 of 6 $\mu$m. The aluminum phosphate had a crystalline structure, and the crystallite size attributable to the zeolite obtained in the X-ray diffraction was 37.2 nm. P2/P1 was 0.9, P2/P3 was 0.07, P1/P3 was 0.08, and P4/P3 was 0.19. In the particle size distributions of the negative electrode active material particles and the aluminum phosphate, D1/D2 was 0.12, where D1 and D2 each represent a particle diameter up to which the particles account for 50% by volume.

Table 1 shows the evaluation results of Examples 1-1 to 1-3 and Comparative Examples 1-1, 1-2.

[Table 1]

| SiOx; D50=6 $\mu$m; 1 $\mu$m or less: 0%; |
| --- |
| graphite (natural graphite:artificial graphite=5:5), D50=20 $\mu$m; |
| SiOx ratio: 10 mass%; Li2SiO3, Li2Si2O5; carbon material average thickness: 100 nm; |

(continued)

| crystallite: 6 nm; modification method: oxidation-reduction doping; zeolite: aluminum phosphate, crystal structure: present, crystallite: 37.2 nm; P2/P1=0.9, P2/P3=0.07, P1/P3=0.08, P4/P3=0.19; carbon coating: present; heating temperature: 600°C; D1/D2=0.12 | | | |
|---|---|---|---|
| Table 1 | x | Capacity retention rate (%) | Initial efficiency (%) |
| Comparative Example 1-1 | 0.3 | 70 | 91. 0 |
| Example 1-1 | 0.5 | 81 | 90.8 |
| Example 1-2 | 1 | 81.5 | 90.7 |
| Example 1-3 | 1.6 | 81.5 | 90.6 |
| Comparative Example 1-2 | 1.8 | 69 | 90.3 |

As shown in Table 1, when the value of "x" in the silicon compound shown by SiOx was outside the range of $0.5 \leq x \leq 1.6$, the battery characteristics were lowered. For example, when oxygen was insufficient (x=0.3) as shown in Comparative Example 1-1, the first-time efficiency was improved, but the capacity retention rate was significantly lowered. Meanwhile, as shown in Comparative Example 1-2, the larger oxygen amount (x=1.8) decreased the electric conductivity and substantially lowered the capacity retention rate.

(Examples 2-1, 2-2)

Secondary batteries were prepared under the same conditions as in Example 1-2, except that the kind of lithium silicate to be incorporated inside the silicon compound particles was changed as shown in Table 2. The cycle characteristics and first-time efficiency were then evaluated.

(Comparative Example 2-1)

A secondary battery was prepared under the same conditions as in Example 1-2, except that lithium was not inserted into the silicon compound particles. The cycle characteristics and first-time efficiency were then evaluated.
The results of Example 2-1 and Comparative Example 2-1 are shown in Table 2.

[Table 2]

| SiOx, x=1; D50=6 $\mu$m; 1 um or less: 0%; graphite (natural graphite:artificial graphite=5:5), D50=20 $\mu$m; SiOx ratio: 10 mass%; carbon material average thickness: 100 nm; crystallite: 6 nm; modification method: oxidation-reduction doping; zeolite: aluminum phosphate, crystal structure: present, crystallite: 37.2 nm; P2/P1=0.9, P2/P3=0.07, P1/P3=0.08, P4/P3=0.19; carbon coating: present; heating temperature: 600°C; D1/D2=0.12 | | | | |
|---|---|---|---|---|
| Table 2 | Presence /absence of Li2SiO3 | Presence /absence of Li2Si2O5 | Capacity retention rate (%) | Initial efficiency (%) |
| Example 1-2 | present | present | 81.5 | 90.7 |
| Example 2-1 | absent | present | 81.5 | 90.4 |
| Example 2-2 | present | absent | 81 | 91.1 |
| Comparative Example 2-1 | absent | absent | 78 | 86.0 |

Incorporating stable lithium silicate such as $Li_2SiO_3$ and $Li_2Si_2O_5$ into the silicon compound improved the capacity retention rate and initial efficiency. Particularly, when both lithium silicates of $Li_2SiO_3$ and $Li_2Si_2O_5$ were incor-

porated, both of the capacity retention rate and the initial efficiency had high values. Meanwhile, in Comparative Example 2-1, no modification to incorporate lithium in the silicon compound was performed, and the capacity retention rate and initial efficiency were lowered.

(Comparative Example 3-1)

A secondary battery was prepared under the same conditions as in Example 1-2, except that the compound having a zeolite crystal structure was not adhered in the negative electrode active material. The cycle characteristics and first-time efficiency were then evaluated.

Moreover, the slurry stability was also evaluated in Example 1-2 and Comparative Example 3-1.

The slurry stability was evaluated based on the time till a gas was generated from the slurry. It can be said that the longer the time, the more stable the slurry. Specifically, 30 g of the prepared negative-electrode mixture slurry was taken out separately from the remaining slurry for producing a secondary battery, and stored at 20°C to measure the time until gas generation after the preparation of the negative-electrode mixture slurry.

Table 3 shows the results of Example 1-2 and Comparative Example 3-1.

[Table 3]

SiOx, x=1; D5 0=6 $\mu$m; 1 $\mu$m or less: 0%;

graphite (nat $\mu$m; ural graphite:a rtificial graphite=5: 5), D50=20

SiOx ratio: 1 average thick 0 mass%; Li2SiO ness: 100 nm; 3, Li2SiO2 5; carbon m aterial

crystallite: doping; 6 nm; modificat ion method : oxidation--reduction

P2/P1=0.9, P2/ /P3=0.07, P1/P3 =0.08, P4/ P3=0.19;

carbon coating : present; heat ing tempe rature: 600 °C;

D1/D2=0.12

| Table 3 | Presence /absence of compound with zeolite crystal structure | Capacity retention rate (%) | Initial efficiency (%) | Time (hours) until gas generation |
|---|---|---|---|---|
| Example 1-2 | present | 81.5 | 90.7 | 168h |
| Comparative Example 3-1 | absent | 81.5 | 90.7 | 48h |

As can be seen from Table 3, adhering the compound having a zeolite crystal structure to the silicon compound improved the slurry stability.

(Examples 4-1, 4-2)

Secondary batteries were prepared under the same conditions as in Example 1-2, except that the crystallite size of Si(220) in the silicon compound was changed as shown in Table 4. The cycle characteristics, first-time efficiency, and slurry stability were then evaluated. The Si(220) crystallite size was adjusted in the step of immobilizing and depositing the silicon oxide gas on the adsorption plate.

[Table 4]

SiOx, x=1; D50=6 $\mu$m; 1 $\mu$m or less: 0% ;

graphite (natural $\mu$m; :artificial graphite=5: 5), D50=20

SiOx ratio: 10 average thickness: mass%; Li2SiO3, 100 nm; iO3, Li2Si2 O5; carbon m aterial

modification m method: tion-reduct ion doping;

zeolite: alumi crystallite: 3 phosphate, 37.2 nm; e, crystal structure: p resent,

P2/P1=0.9, P2/ P2/P3=0.07, P3=0.08, P4 /P3=0.19;

carbon coating: present; eating temp erature: 600 °C;

D1/D2=0.12

(continued)

| Table 4 | Crystallite size (nm) of Si (220) | Capacity retention rate (%) | Initial efficiency (%) | Time (hours) until gas generation |
|---|---|---|---|---|
| Example 4-1 | 9 | 80.3 | 90.9 | 96h |
| Example 1-2 | 6 | 81.5 | 90.7 | 168h |
| Example 4-2 | 5 | 82 | 90.3 | 168h |

Table 4 shows that if the crystallite size determined by the Scherrer equation based on Si(220) is large as in Example 4-1, the exposed Si on the silicon compound surface is increased; consequently, the slurry stability was lowered in comparison with Example 1-2. Therefore, the Si crystallite size is preferably 7 nm or less. If the crystallite size of Si(220) is small as in Example 4-2, the initial efficiency is lowered in comparison with Example 1-2. Meanwhile, the capacity retention rate is high in comparison with Example 1-2, and the negative electrode active material itself had no problems.

(Examples 5-1 to 5-4)

Secondary batteries were prepared under the same conditions as in Example 1-2, except that the diffraction peak intensity ratio P2/P1 in the X-ray diffraction was changed as shown in Table 5. The cycle characteristics, first-time efficiency, and slurry stability were then evaluated. P2/P1 was adjusted by changing the peak intensity of P2 in the step of immobilizing and depositing the silicon oxide gas on the adsorption plate.

[Table 5]

| SiOx, x=1; D50=6 $\mu$m; 1 $\mu$m or less: 0%; graphite (natural graphite:artificial graphite=5:5), D50=20 $\mu$m; SiOx ratio: 10 mass%; Li2SiO3, Li2Si2O5; carbon material average thickness: 100 nm; crystallite: 6 nm; modification method: oxidation-reduction doping; zeolite: aluminum phosphate, crystal structure: present, crystallite: 37.2 nm; P2/P3=0.07, P1/P3=0.08, P4/P3=0.19; carbon coating: present; heating temperature: 600°C; D1/D2=0.12 | | | | |
|---|---|---|---|---|
| Table 5 | P2/P1 | Capacity retention rate (%) | Initial efficiency (%) | Time (hours) until gas generation |
| Example 5-1 | 0.001 | 81.5 | 89.0 | 168h |
| Example 5-2 | 0.01 | 81.5 | 90.5 | 168h |
| Example 5-3 | 0.07 | 81.5 | 90.6 | 168h |
| Example 1-2 | 0.9 | 81.5 | 90.7 | 168h |
| Example 5-4 | 1.2 | 78.5 | 91.0 | 96h |

As can be seen from Table 5, if the ratio P2/P1 was smaller than 0.01 (Example 5-1), the initial efficiency became lower than those in Examples 5-2, 5-3, and 1-2, in which the ratio was 0.01 or more. If the ratio P2/P1 was larger than 1 (Example 5-4), the capacity retention rate and the slurry stability became lower than those in Examples 5-2, 5-3, and 1-2, in which the ratio was 1 or less. This is because if the Si has higher crystallinity, the exposed Si on the silicon compound surface is increased.

(Examples 6-1 to 6-4)

Secondary batteries were prepared under the same conditions as in Example 1-2, except that the diffraction peak intensity ratio P2/P3 in the X-ray diffraction was changed as shown in Table 6. The cycle characteristics, first-time efficiency, and slurry stability were then evaluated. P2/P3 was adjusted by changing the peak intensity of P2 in the step of immobilizing and depositing the silicon oxide gas on the adsorption plate.

[Table 6]

SiOx, x=1; D50=6 μm; 1 μm or less: 0%;
graphite (natural graphite:artificial graphite=5:5), D50=20 μm;
SiOx ratio: 10 mass%; Li2SiO3, Li2Si2O5; carbon material average thickness: 100 nm;
crystallite: 6 nm; modification method: oxidation-reduction doping;
zeolite: aluminum phosphate, crystal structure: present, crystallite: 37.2 nm;
P2/P1=0.9, P1/P3=0.08, P4/P3=0.19;
carbon coating: present; heating temperature: 600°C;
D1/D2=0.12

| Table 6 | P2/P3 | Capacity retention rate (%) | Initial efficiency (%) | Time (hours) until gas generation |
|---|---|---|---|---|
| Example 6-1 | 0.001 | 81.8 | 89.0 | 168h |
| Example 6-2 | 0.01 | 81.7 | 90.6 | 168h |
| Example 1-2 | 0.07 | 81.5 | 90.7 | 168h |
| Example 6-3 | 0.1 | 81.2 | 90.8 | 144h |
| Example 6-4 | 0.2 | 79.6 | 90.9 | 120h |

Table 6 shows that if the ratio P2/P3 was smaller than 0.01 (Example 6-1), the initial efficiency became lower than those in Examples 6-2, 6-3, and 1-2, in which the ratio was 0.01 or more. If the ratio P2/P3 was larger than 0.1 (Example 6-4), the capacity retention rate and slurry stability became lower than those in Examples 6-2, 6-3, and 1-2, in which the ratio was 0.1 or less. This is because if the Si has higher crystallinity, the exposed Si on the silicon compound surface is increased.

(Examples 7-1 to 7-4)

Secondary batteries were prepared under the same conditions as in Example 1-2, except that the diffraction peak intensity ratio P1/P3 in the X-ray diffraction was changed as shown in Table 7. The cycle characteristics, first-time efficiency, and slurry stability were then evaluated. P1/P3 was adjusted by changing the Li amount in the event of modification.

[Table 7]

SiOx, x=1; D5 0=6 μm; 1 μm or less: 0%;
graphite (nat μm; ural graphite:artificial graphite=5:5), D50=20
SiOx ratio: 1 average thick 0 mass%; ness: 100 Li2SiO3, Li2Si2O5; nm; carbon material
crystallite: doping; 6 nm; modification method: oxidation-reduction
zeolite: alum crystallite: inum phosphate 37.2 nm; crystal structure: present,
P2/P1=0.9, P2/ /P3=0.07, P4/P3=0.19;
carbon coatin g: present; heating temperature: 600°C;
D1/D2=0.12

| Table 7 | P1/P3 | Capacity retention rate (%) | Initial efficiency (%) | Time (hours) until gas generation |
|---|---|---|---|---|
| Example 7-1 | 0.001 | 79.8 | 91.0 | 72h |
| Example 7-2 | 0.01 | 81.1 | 90.8 | 144h |
| Example 1-2 | 0.08 | 81.5 | 90.7 | 168h |
| Example 7-3 | 1 | 81.5 | 90.7 | 168h |
| Example 7-4 | 1.2 | 82 | 90.0 | 168h |

Table 7 shows that since decreasing P1/P3 decreases the proportion of $Li_2Si_2O_5$, which is more insoluble in water, the slurry stability in Example 7-1 with P1/P3 being smaller than 0.01 was lower than those in Examples 7-2, 1-2, and 7-3 with P1/P3 being 0.01 or more. Increasing P1/P3 increases the proportion of $Li_2Si_2O_5$, thereby decreasing the amount of Li fixed as lithium silicate. Hence, the initial efficiency in Example 7-4 with P1/P3 being larger than 1 was lower than those in Examples 7-2, 1-2, and 7-3 with P1/P3 being 1 or less.

(Comparative Example 8-1)

A secondary battery was prepared under the same conditions as in Example 1-2, except that aluminum phosphate having an amorphous structure but having no diffraction peak attributable to zeolite crystal structure in the X-ray diffraction was adhered to the silicon compound instead of the compound having a zeolite crystal structure. The cycle characteristics, first-time efficiency, and slurry stability were then evaluated.

[Table 8]

| SiOx, x=1; D50=6 $\mu$m; 1 $\mu$m or less: 0%; graphite (natural graphite:artificial graphite=5:5), D50=20 $\mu$m; SiOx ratio: 10 mass%; Li2SiO3, Li2Si2O5; carbon material average thickness: 100 nm; crystallite: 6 nm; modification method: oxidation-reduction doping; zeolite: aluminum phosphate; P2/P1=0.9, P2/P3=0.07, P1/P3=0.08, P4/P3=0.19; carbon coating: present; heating temperature: 600°C; D1/D2=0.12 | | | | |
|---|---|---|---|---|
| Table 8 | Presence /absence of zeolite crystal structure | Capacity retention rate (%) | Initial efficiency (%) | Time (hours) until gas generation |
| Example 1-2 | present | 81.5 | 90.7 | 168h |
| Comparative Example 8-1 | absent | 81.5 | 90.7 | 48h |

As can be seen from Table 8, if a compound does not have a zeolite crystal structure and thus does not exhibit a diffraction peak attributable to zeolite crystal structure in the X-ray diffraction (Comparative Example 8-1), no adsorption characteristics peculiar to zeolite structure are exhibited. Consequently, the slurry stability was lowered.

(Examples 9-1, 9-2)

Secondary batteries were prepared under the same conditions as in Example 1-2, except that the crystallite size attributable to the zeolite crystal structure in the X-ray diffraction of the compound having the zeolite crystal structure was changed as shown in Table 9. The cycle characteristics, first-time efficiency, and slurry stability were then evaluated. The crystallite size attributable to the zeolite crystal structure was adjusted by pulverizing the compound having a zeolite crystal structure.

[Table 9]

| SiOx, x=1; D50=6 $\mu$m; 1 $\mu$m or less: 0%; graphite (natural graphite:artificial graphite=5:5), D50=20 $\mu$m; SiOx ratio: 10 mass%; Li2SiO3, Li2Si2O5; carbon material average thickness: 100 nm; crystallite: 6 nm; modification method: oxidation-reduction doping; zeolite: aluminum phosphate, crystal structure: present; P2/P1=0.9, P2/P3=0.07, P1/P3=0.08, P4/P3=0.19; carbon coating: present; heating temperature: 600°C; D1/D2=0.12 | | | | |
|---|---|---|---|---|
| Table 9 | Zeolite crystallite size (nm) | Capacity retention rate (%) | Initial efficiency (%) | Time (hours) until gas generation |
| Example 1-2 | 37.2 | 81.5 | 90.7 | 168h |

(continued)

| Table 9 | Zeolite crystallite size (nm) | Capacity retention rate (%) | Initial efficiency (%) | Time (hours) until gas generation |
|---|---|---|---|---|
| Example 9-1 | 10 | 81.5 | 90.7 | 168h |
| Example 9-2 | 5 | 81.5 | 90.7 | 120h |

As shown in Table 9, if the crystallite size attributable to the zeolite crystal structure according to the X-ray diffraction was smaller than 10 nm (Example 9-2), the adsorption characteristics peculiar to the zeolite structure were exhibited less and the slurry stability became lower than those in Examples 1-2 and 9-1, in which the crystallite size was 10 nm or more.

(Examples 10-1 to 10-4)

Secondary batteries were prepared under the same conditions as in Example 1-2, except that the diffraction peak intensity ratio P4/P3 in the X-ray diffraction was changed as shown in Table 10. The cycle characteristics, first-time efficiency, and slurry stability were then evaluated. P4/P3 was adjusted by pulverizing the compound having a zeolite crystal structure to change the P4 value.

[Table 10]

| SiOx, x=1; D50=6 $\mu$m; 1 $\mu$m or less: 0%; graphite (natural graphite:artificial graphite=5:5), D50=20 $\mu$m; SiOx ratio: 10 mass%; Li2SiO3, Li2Si2O5; carbon material average thickness: 100 nm; crystallite: 6 nm; modification method: oxidation-reduction doping; zeolite: aluminum phosphate, crystal structure: present, crystallite: 37.2 nm; P2/P1=0.9, P2/ P3=0.07, P1/P3=0.08; carbon coating: present ; heating te mperature: 60 0°C; D1/D2=0.12 | | | | |
|---|---|---|---|---|
| Table 10 | P4/P3 | Capacity retention rate (%) | Initial efficiency (%) | Time (hours) until gas generation |
| Example 10-1 | 1.2 | 81.5 | 90.7 | 72h |
| Example 10-2 | 1 | 81.5 | 90.7 | 96h |
| Example 10-3 | 0.8 | 81.5 | 90.7 | 120h |
| Example 10-4 | 0.5 | 81.5 | 90.7 | 144h |
| Example 1-2 | 0.19 | 81.5 | 90.7 | 168h |

Table 10 shows such a trend that increasing P4/P3 makes it hard for the compound having a zeolite crystal structure to uniformly adhere to the outermost surface of the silicon compound, thereby lowering the slurry stability. Meanwhile, with smaller P4/P3, the compound having a zeolite crystal structure uniformly adheres to the outermost surface of the silicon compound, thereby improving the slurry stability. The results in Table 10 revealed that P4/P3 preferably satisfies a relation of P4/P3≤1 (Examples 10-2 to 10-4, 1-2), more preferably satisfies a relation of P4/P3≤0.5 (Examples 10-4, 1-2).

(Examples 11-1 to 11-4)

Secondary batteries were prepared under the same conditions as in Example 1-2, except that the kind of the compound having a zeolite crystal structure was changed as shown in Table 11. The cycle characteristics, first-time efficiency, and slurry stability were then evaluated.

[Table 11]

SiOx, x=1; D50=6 μm; 1 μm or less: 0%;
graphite (natural graphite:artificial graphite=5:5), D50=20 μm;
SiOx ratio: 10 average thick mass%; ness: 100 nm; Li2SiO3, Li2Si2O5; carbon m aterial
crystallite: 6 doping; nm; modification meth od: oxidation -reduction
zeolite: crys tal structure: present, crystallite: 37.2 nm;
P2/P1=0.9, P2/ /P3=0.07, P1/P3=0.08, P4/P3=0.19;
carbon coatin g: present; heating temperature: 600 °C;
D1/D2=0.12

| Table 11 | Kind of zeolite compound | Capacity retention rate (%) | Initial efficiency (%) | Time (hours) until gas generation |
|---|---|---|---|---|
| Example 11-1 | aluminosilicate | 81.4 | 90.7 | 168h |
| Example 1-2 | aluminum phosphate | 81.5 | 90.7 | 168h |
| Example 11-2 | aluminoborate | 81.2 | 90.7 | 168h |
| Example 11-3 | molybdenum phosphate | 81.5 | 90.7 | 168h |
| Example 11-4 | aluminoarsenate | 81.4 | 90.7 | 168h |

Table 11 shows that the use of the compounds having a zeolite crystal structure improved the slurry stability. This is because of the adsorption characteristics peculiar to the zeolite structures.

(Example 12-1)

A secondary battery was prepared under the same conditions as in Example 1-2, except that no carbon coating was formed. The cycle characteristics, first-time efficiency, and slurry stability were then evaluated.

[Table 12]

SiOx, x=1; D50=6 μm; 1 μm or less: 0%; graphite (natural graphite:artificial graphite=5:5), D50=20 μm;
SiOx ratio: 10 mass%; Li2SiO3, Li2Si2O5; carbon material average thickness: 100 nm;
crystallite: 6 nm; modification method: oxidation-reduction doping;
zeolite: aluminum phosphate, crystal structure: present, crystallite: 37.2 nm;
P2/P1=0.9, P2/P3=0.07, P1/P3=0.08, P4/P3=0.19;
heating temperature: 600°C; D1/D2=0.12

| Table 12 | Presence /absence of carbon coating | Capacity retention rate (%) | Initial efficiency (%) | Time (hours) until gas generation |
|---|---|---|---|---|
| Example 1-2 | present | 81.5 | 90.7 | 168h |
| Comparative Example 12-1 | absent | 40 | 87.0 | 48h |

Table 12 shows that forming the carbon coating improved the conductivity and battery characteristics.

(Examples 13-1 to 13-4)

Secondary batteries were prepared under the same conditions as in Example 1-2, except that the heating temperature after the oxidation-reduction doping was changed as shown in Table 13. The cycle characteristics, first-time efficiency, and slurry stability were then evaluated.

[Table 13]

SiOx, x=1; D50=6 μm; 1 μm or less: 0%;
graphite (natural graphite:artificial graphite=5:5), D50=20 μm;

(continued)

| SiOx ratio: 10 mass%; Li2SiO3, Li2Si2O5; carbon material average thickness: 100 nm; crystallite: 6 nm; modification method: oxidation-reduction doping; zeolite: aluminum phosphate, crystal structure: present, crystallite: 37.2 nm; P2/P1=0.9, P2/P3=0.07, P1/P3=0.08, P4/P3=0.19; carbon coating: present; D1/D2=0.12 | | | | |
|---|---|---|---|---|
| Table 13 | Heating temperature (°C) | Capacity retention rate (%) | Initial efficiency (%) | Time (hours) until gas generation |
| Example 13-1 | 300 | 82.3 | 87.0 | 168h |
| Example 13-2 | 400 | 82 | 87.9 | 168h |
| Example 1-2 | 600 | 81.5 | 90.7 | 168h |
| Example 13-3 | 700 | 78.5 | 90.9 | 120h |
| Example 13-4 | 800 | 78 | 91.8 | 96h |

If the heating temperature is lower, the lithium silicate tends not to be fixed. In this case, a reversible component is generated in charging or discharging the battery. Accordingly, as can be seen from Table 13, the initial efficiency in Example 13-1 with the heating temperature less than 400°C was lower than those in Examples 13-2, 1-2, and 13-3, in which the heating temperature was 400°C or more and 700°C or less. Meanwhile, if the heating temperature is higher, the crystallinity of Si is increased, so that the exposed Si on the silicon compound surface is increased. Accordingly, in Example 13-4 with the heating temperature exceeding 700°C, the slurry stability became lower than those in Examples 13-2, 1-2, and 13-3, in which the heating temperature was 400°C or more and 700°C or less.

(Examples 14-1 to 14-4)

Secondary batteries were prepared under the same conditions as in Example 1-2, except that the ratio D1/D2 of particle diameters up to which the particles accounted for 50% based on volume in the particle size distributions was changed as shown in Table 14. The cycle characteristics, first-time efficiency, and slurry stability were then evaluated. D1/D2 was adjusted by pulverizing the compound having a zeolite crystal structure to change the D1 value.

[Table 14]

| SiOx, x=1; D50=6 $\mu$m; 1 $\mu$m or less: 0%; graphite (natural graphite:artificial graphite=5:5), D50=20 $\mu$m; SiOx ratio: 10 mass%; Li2SiO3, Li2Si2O5; carbon material average thickness: 100 nm; crystallite: 6 nm; modification method: oxidation-reduction doping; zeolite: aluminum phosphate, crystal structure: present, crystallite: 37.2 nm; P2/P1=0.9, P2/P3=0.07, P1/P3=0.08, P4/P3=0.19; carbon coating: present; heating temperature: 600°C | | | | |
|---|---|---|---|---|
| Table 14 | D1/D2 | Capacity retention rate (%) | Initial efficiency (%) | Time (hours) until gas generation |
| Example 14-1 | 0.001 | 81.5 | 90.7 | 96h |
| Example 14-2 | 0.01 | 81.5 | 90.7 | 120h |
| Example 1-2 | 0.12 | 81.5 | 90.7 | 168h |
| Example 14-3 | 2 | 78.5 | 90.7 | 168h |
| Example 14-4 | 3 | 78 | 90.7 | 96h |

Decreasing D1/D2 mitigates the crystallite size of the compound having a zeolite crystal structure, and the adsorption characteristics peculiar to the zeolite structure were exhibited less. Accordingly, as shown in Table 14, the slurry stability in Example 14-1 with D1/D2 of less than 0.01 was lower than those in Examples 14-2, 1-2, and 14-3, in which D1/D2 was 0.01 or more. Meanwhile, increasing D1/D2 makes it hard for the compound having a zeolite crystal structure to uniformly adhere to the outermost surface of the silicon compound. Accordingly, the slurry stability in Example 14-4 with D1/D2 exceeding 2 was lower than those in Examples 14-2, 1-2, and 14-3, in which D1/D2 was 2 or less.

(Examples 15-1, 15-2)

Secondary batteries were prepared under the same conditions as in Example 1-2, except that the proportion of primary particles 1 $\mu$m or less among all the primary silicon-compound particles was changed as shown in Table 15. The cycle characteristics, first-time efficiency, and slurry stability were then evaluated. The proportion of the primary silicon compound particles of 1 $\mu$m or less was adjusted through the condition under which the silicon compound particles were ground with the ball mill.

[Table 15]

| | SiOx, x=1; D50=6 $\mu$m; graphite (natural graphite:artificial graphite=5:5), D50=20 $\mu$m; SiOx ratio: 10 mass%; Li2SiO3, Li2Si2O5; carbon material average thickness: 100 nm; crystallite: 6 nm; modification method: oxidation-reduction doping; zeolite: aluminum phosphate, crystal structure: present, crystallite: 37.2 nm; P2/P1=0.9, P2/P3=0.07, P1/P3=0.08, P4/P3=0.19; carbon coating: present; heating temperature: 600°C; D1/D2=0.12 | | | |
|---|---|---|---|---|
| Table 15 | Proportion of silicon compound particles of 1 $\mu$m or less | Capacity retention rate (%) | Initial efficiency (%) | Time (hours) until gas generation |
| Example 15-1 | 8 | 78.1 | 90.6 | 120h |
| Example 15-2 | 5 | 78.3 | 90.7 | 144h |
| Example 1-2 | 0 | 81.5 | 90.7 | 168h |

As can be seen from Table 15, since increasing the proportion of primary particles 1 $\mu$m or less among all the primary silicon-compound particles (Example 15-1) increases the specific surface area of the negative electrode active material particles, and Li elution is facilitated; consequently, the slurry stability was lowered in comparison with Examples 15-2 and 1-2, in which the proportion of the primary particles of 1 $\mu$m or less was 5% or less.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

**Claims**

1.  A negative electrode active material for a non-aqueous electrolyte secondary battery, containing negative electrode active material particles, wherein

the negative electrode active material particles comprise silicon compound particles each containing a silicon compound ($SiO_X$: $0.5 \leq X \leq 1.6$),

the silicon compound particle contains at least one or more of amorphous silicon and microcrystalline silicon,

the negative electrode active material particles each contain at least one or more of $Li_2SiO_3$ and $Li_2Si_2O_5$ as a Li compound, and

the negative electrode active material particle comprises a compound having a zeolite crystal structure, the compound adhering to a surface layer portion of the negative electrode active material particle.

2. The negative electrode active material for a non-aqueous electrolyte secondary battery according to claim 1, wherein the compound having a zeolite crystal structure has a diffraction peak which appears within a range of a diffraction angle $2\theta$ from 21 to 22° in an X-ray diffraction using a Cu-K$\alpha$ line.

3. The negative electrode active material for a non-aqueous electrolyte secondary battery according to claim 1 or 2, wherein the compound having a zeolite crystal structure has a crystallite size of 10 nm or more determined by a Scherrer equation based on a half-value width of a diffraction peak which appears within a range of a diffraction angle $2\theta$ from 21 to 22° in an X-ray diffraction using a Cu-K$\alpha$ line.

4. The negative electrode active material for a non-aqueous electrolyte secondary battery according to any one of claims 1 to 3, wherein the compound having a zeolite crystal structure is at least any one of aluminosilicate, aluminum phosphate, aluminoborate, molybdenum phosphate, and aluminoarsenate.

5. The negative electrode active material for a non-aqueous electrolyte secondary battery according to any one of claims 1 to 4, wherein

a relation of $0.01 \leq D1/D2 \leq 2$ is satisfied, where

D1 represents a particle diameter up to which particles account for 50% based on volume in a particle size distribution of the compound having a zeolite crystal structure, and

D2 represents a particle diameter up to which particles account for 50% based on volume in a particle size distribution of the silicon compound particles.

6. The negative electrode active material for a non-aqueous electrolyte secondary battery according to any one of claims 1 to 5, wherein

the negative electrode active material particles satisfy a relation of $P4/P3 \leq 1$ in an X-ray diffraction using a Cu-K$\alpha$ line, where

P4 represents a peak height of a diffraction peak which is attributable to the compound having a zeolite crystal structure and appears within a range of a diffraction angle $2\theta$ from 21 to 22°, and

P3 represents a peak height of a diffraction peak which is attributable to at least part of $Li_2SiO_3$ and appears within a range of a diffraction angle $2\theta$ from 17 to 21°.

7. The negative electrode active material for a non-aqueous electrolyte secondary battery according to claim 6, wherein the P4/P3 satisfies a relation of $P4/P3 \leq 0.5$.

8. The negative electrode active material for a non-aqueous electrolyte secondary battery according to any one of claims 1 to 7, wherein

the silicon compound particles satisfy a relation of $0.01 \leq P2/P1 \leq 1$ in an X-ray diffraction using a Cu-K$\alpha$ line, where

P1 represents a peak height of a diffraction peak which is attributable to at least part of $Li_2Si_2O_5$ and appears within a range of a diffraction angle $2\theta$ from 23 to 26°, and

P2 represents a peak height of a diffraction peak which is attributable to Si(220) and appears within a range of a diffraction angle $2\theta$ from 44 to 50°.

9. The negative electrode active material for a non-aqueous electrolyte secondary battery according to any one of claims 1 to 8, wherein

the silicon compound particles satisfy a relation of $0.01 \leq P2/P3 \leq 0.1$ in an X-ray diffraction using a Cu-K$\alpha$ line, where

P3 represents a peak height of a diffraction peak which is attributable to at least part of $Li_2SiO_3$ and appears

within a range of a diffraction angle 2θ from 17 to 21°, and

P2 represents a peak height of a diffraction peak which is attributable to Si(220) and appears within a range of a diffraction angle 2θ from 44 to 50°.

10. The negative electrode active material for a non-aqueous electrolyte secondary battery according to any one of claims 1 to 9, wherein

the silicon compound particles satisfy a relation of $0.01 \leq P1/P3 \leq 1$ in an X-ray diffraction using a Cu-Kα line, where P1 represents a peak height of a diffraction peak which is attributable to at least part of $Li_2Si_2O_5$ and appears within a range of a diffraction angle 2θ from 23 to 26°, and

P3 represents a peak height of a diffraction peak which is attributable to $Li_2SiO_3$ and appears within a range of a diffraction angle 2θ from 17 to 21°.

11. The negative electrode active material for a non-aqueous electrolyte secondary battery according to any one of claims 1 to 10, wherein the silicon compound particles have a crystallite size of 7 nm or less determined by a Scherrer equation based on a half-value width of a diffraction peak which is assigned to Si(220) in an X-ray diffraction using a Cu-Kα line.

12. The negative electrode active material for a non-aqueous electrolyte secondary battery according to any one of claims 1 to 11, wherein at least part of the surfaces of the silicon compound particles is coated with a carbon coating.

13. The negative electrode active material for a non-aqueous electrolyte secondary battery according to any one of claims 1 to 12, wherein primary particles of the silicon compound particles include primary particles with particle diameters of 1 μm or less in a proportion of 5% or less based on volume.

14. A method for producing a negative electrode active material for a non-aqueous electrolyte secondary battery containing negative electrode active material particles including silicon compound particles, the method comprising steps of:

preparing silicon compound particles each containing a silicon compound ($SiO_X$: $0.5 \leq X \leq 1.6$);

modifying the silicon compound particles by inserting Li into the silicon compound particles to form at least one or more of $Li_2SiO_3$ and $Li_2Si_2O_5$ as a Li compound; and

adhering a compound having a zeolite crystal structure on surfaces of the modified silicon compound particles, wherein the silicon compound particles with the compound having a zeolite crystal structure and adhering thereto are used to produce a negative electrode active material for a non-aqueous electrolyte secondary battery.

15. The method for producing a negative electrode active material for a non-aqueous electrolyte secondary battery according to claim 14, wherein at least after the step of modifying the silicon compound particles, the modified silicon compound particles are heated at a heating temperature of 400°C or more and 700°C or less.

[FIG. 1]

[FIG. 2]

[FIG. 3]

## INTERNATIONAL SEARCH REPORT

| | International application No. |
|---|---|
| | PCT/JP2019/049538 |

A. CLASSIFICATION OF SUBJECT MATTER
Int. Cl. H01M4/48(2010.01)i, C01B33/113(2006.01)i, C01B33/32(2006.01)i,
H01M4/36(2006.01)i
FI: H01M4/48, H01M4/36 A, H01M4/36 C, C01B33/113 A, C01B33/32
According to International Patent Classification (IPC) or to both national classification and IPC

B. FIELDS SEARCHED

Minimum documentation searched (classification system followed by classification symbols)
Int. Cl. H01M4/48, C01B33/113, C01B33/32, H01M4/36

Documentation searched other than minimum documentation to the extent that such documents are included in the fields searched
Published examined utility model applications of Japan    1922-1996
Published unexamined utility model applications of Japan    1971-2020
Registered utility model specifications of Japan    1996-2020
Published registered utility model applications of Japan    1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2017/145654 A1 (SHIN-ETSU CHEMICAL CO., LTD.) 31 August 2017, paragraphs [0115]-[0136], table 1 | 1-15 |
| A | JP 2015-118879 A (EHIME UNIVERSITY) 25 June 2015, paragraph [0042] | 1-15 |
| A | WO 2018/061536 A1 (SHIN-ETSU CHEMICAL CO., LTD.) 05 April 2018 | 1-15 |
| A | WO 2018/051710 A1 (SHIN-ETSU CHEMICAL CO., LTD.) 22 March 2018 | 1-15 |

☐   Further documents are listed in the continuation of Box C.     ☒   See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 02.03.2020 | 10.03.2020 |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

| INTERNATIONAL SEARCH REPORT | | International application No. | |
| --- | --- | --- | --- |
| Information on patent family members | | PCT/JP2019/049538 | |

| Patent Documents referred to in the Report | Publication Date | Patent Family | Publication Date |
| --- | --- | --- | --- |
| WO 2017/145654 A1 | 31.08.2017 | US 2019/0214637 A1 paragraphs [0141]-[0162], table 1 JP 2017-152358 A EP 3407408 A1 CN 108701825 A KR 10-2018-0114061 A TW 201810780 A | |
| JP 2015-118879 A | 25.06.2015 | (Family: none) | |
| WO 2018/061536 A1 | 05.04.2018 | US 2019/0229332 A1 JP 2018-60771 A EP 3522271 A1 CN 109792047 A KR 10-2019-0059906 A TW 201826599 A | |
| WO 2018/051710 A1 | 22.03.2018 | US 2019/0221836 A1 JP 2018-49811 A EP 3514866 A1 CN 109155405 A KR 10-2019-0049683 A TW 201817065 A | |

Form PCT/ISA/210 (patent family annex) (January 2015)

# EP 3 913 710 A1

**Patent documents cited in the description**

- JP 2001185127 A
- JP 2002042806 A
- JP 2006164954 A
- JP 2006114454 A
- JP 2009070825 A
- JP 2008282819 A
- JP 2008251369 A
- JP 2008177346 A
- JP 2007234255 A
- JP 2009212074 A
- JP 2009205950 A
- JP H6325765 A
- JP 2010092830 A